Europäisches Patentamt

European Patent Office

Office européen des brevets

(11) Publication number: **0 072 661**
**A2**

(12) # EUROPEAN PATENT APPLICATION

(21) Application number: **82304231.2**

(22) Date of filing: **10.08.82**

(51) Int. Cl.³: **H 02 M 3/335**

(30) Priority: **17.08.81 US 293397**

(43) Date of publication of application:
**23.02.83 Bulletin 83/8**

(84) Designated Contracting States:
**DE FR GB**

(71) Applicant: **COMPOWER CORPORATION**
**2220 Lundy Avenue**
**San Jose California 95131(US)**

(72) Inventor: **Tuma, Wade B.**
**20975 Zayante Road**
**Los Gatos Santa Clara California(US)**

(74) Representative: **MacGregor, Gordon et al,**
**ERIC POTTER & CLARKSON 14 Oxford Street**
**Nottingham, NG1 5BP(GB)**

(54) Switching power supply.

(57) A switching power supply (10) in which the maximum power output is limited during various line voltages within a predetermined range on a cycle by cycle basis. The power supply (10) comprises a transformer (15) in which an alternating current voltage is applied across the primary winding (15a) thereof. Switching means (25) are connected in series with the primary winding (15a). The repetitive conduction and non-conduction of the switching means (25) controls the flow of current in the secondary winding circuit (30) of the transformer (15) for producing a direct current output voltage in the secondary winding circuit (30). Output voltage is produced in the secondary winding circuit (30) during the interval the switching means (25) is not conducting. For limiting the maximum power output in the secondary winding circuit (30) during various line voltages, a control circuit (40) controls the maximum conduction time of the switching means (25) in response to the rectified voltage appearing across the primary winding (15a) of the transformer (15). The conduction time of the switching means (25) under the control of the control circuit (40) is commensurate with the time it takes the current flowing through the primary winding (15a) of the transformer (15) to reach a predetermined magnitude and is commensurate with the magnitude of the voltage across the primary winding (15a) of the transformer (15) varying from a preselected magnitude. Thus, the output power produced in the secondary winding circuit (30) has a predetermined maximum value although there is a variance from the preselected limits for the line voltage.

./...

_fig_1_

## SWITCHING POWER SUPPLY

The present invention relates in general to power supplies, and more particularly to a switching power supply.

Rectified and filtered alternating current line voltage has been converted to a direct current output voltage through the repetitious opening and closing of a switch in series with the primary winding of a transformer. When the switch was closed, the current flow in the primary winding of the transformer increased and energy was stored in the core of the transformer. During this interval of time, a rectifier in the secondary winding circuit of the transformer was reversed biased and non-conducting. When the switch was opened, the action of the inductance of the primary winding caused the voltage across the primary winding to increase in magnitude above the rectified and filtered line voltage. Thereupon, the rectifier in the secondary winding circuit conducted to provide a direct current output voltage. The direct current output voltage was a function of the energy stored in the core of the line transformer.

With the advent of computers, it became important to provide a power supply that maintained a relatively constant maximum power output at various line voltages. It has been known that line voltages and line frequencies may vary from country to country. Yet, the power requirements for the storage of data in memories must remain within fixed limits. The need for a constant power output was apparent. Under fault conditions, additional power over the rated power may result in damage to the wiring of computers. Failure of the power supply to properly handle power in excess of the rated power may cause the power supply to fail.

In typical flyback power supplies, the power supply was protected against overloading by limiting the peak current to a known value. This arrangement has not been

2

satisfactory. While the load current remained constant, the rectified and filtered a.c. line voltage varied. Increases in the line voltage resulted in the increases in the power output. Such systems were not economical to manufacture.

A switching power supply in which switching means control the flow of current in the primary winding of a transformer to produce in a secondary winding circuit of the transformer direct current voltage of pulse widths controlled by the switching means. A control circuit controls the operation of the switching means in response to the voltage across the primary winding. The pulse width of the direct current voltage produced in the secondary winding circuit of the transformer is inversely related to the magnitude of the voltage across the primary winding of the transformer when there is a variance from the preselected limits for the line voltage.

A switching power supply for limiting maximum power output during various line voltages within a predetermined range on a cycle by cycle basis in which switching means control the flow of current in the primary winding of a transformer in a secondary winding circuit of the transformer direct current voltage controlled by the switching means. A control circuit controls the operation of the switching means in response to the current flow through the primary winding reaching a predetermined magnitude and in response to variations of voltage across the primary winding of the transformer from a predetermined magnitude.

By virtue of the present invention the power output of the switching power supply is limited to a maximum value over a range of various line voltages.

A feature of the present invention is the maximum power output for the switching power supply is on a cycle by cycle basis rather than an average power basis. Thus, the components of the power supply are never subjected to an excessive power output during any conversion cycle. The power supply does not on any occasion produce more than the maximum rated output whether the operating condition is normal or under fault or during transient intervals.

Another feature of the present invention is that the power supply circuit requires less open loop gain around its switching control circuit. Thus, improved output voltage regulation is attainable without instability and slow response time caused by high loop gain.

Another feature of the present invention is the low power consumption.

Still another feature of the present invention is the ability to have a stable operation over a relatively wide temperature range.

Reference is now made to the accompanying drawings wherein:

Figure 1 is a simplified schematic diagram of a switching power supply embodying the present invention.

Figure 2 is a detailed schematic diagram of the switching power supply shown in Figure 1.

DESCRIPTION OF THE PREFERRED EMBODIMENT

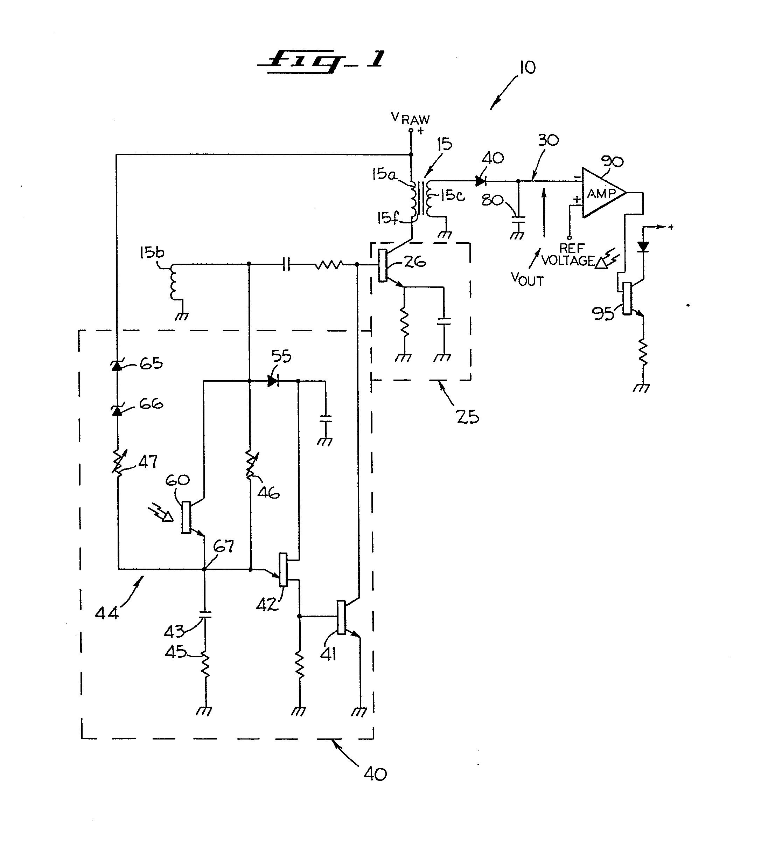

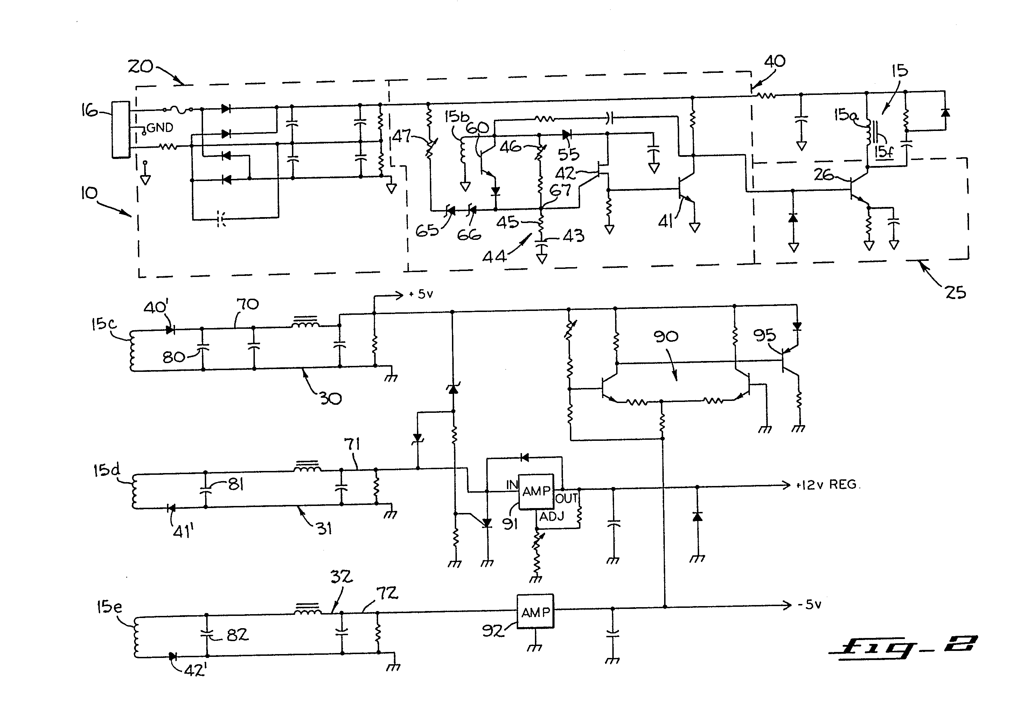

Illustrated in Figures 1 and 2 is a switching power supply 10 embodying the present invention in which the maximum power output is limited during various line voltages within a predetermined range on a cycle by cycle basis. The power supply 10 comprises a suitable transformer 15. As shown in the drawings, the transformer 15 includes a primary winding 15a, secondary windings 15b-15e and a core 15f.

Voltage is applied across the primary winding 15a of the transformer 15. In the preferred embodiment, the voltage is a rectified and filtered alternating current voltage (Vraw). For applying a rectified and filtered alternating current voltage across the primary winding 15a, alternating current line voltage is applied to a terminal board 16 (Figure 2). Connected to the terminal board 16 and the primary winding 15a of the transformer 15 is a conventional and suitable rectifying and filtering circuit 20 (Figure 2).

Switching means 25 (Figs. 1 and 2) control the time interval of the flow of current through the primary winding 15a of the transformer 15. In the exemplary embodiment, the switching means 25 include a switching transistor 26 that has its collector electrode connected in series with the primary winding 15a. When the switching transistor 26 conducts, current flow in the primary winding 15a increases and energy is stored in the core 15f of the line transformer 15. During the interval of time in which the switching transistor 26 conducts, no output voltage is produced in the secondary windings 15b-15e of the transformer 15. The secondary windings 15c-15e are included respectively in secondary winding circuits 30-32. Suitable rectifiers 40-42 are respectively included in the secondary winding circuits 30-32. An output circuit for each of the secondary winding circuits includes that section of the secondary winding circuit connected to its associated secondary winding.

During the time interval that the switching transistor 26 conducts, the rectifiers 40-42 are respectively reversed bias and non-conducting. When the switching transistor 26 is not conducting, the voltage across the primary winding 15a rises above the rectified and filtered alternating current voltage across the primary winding 15a. As a consequence thereof, the rectifiers 40-42 conduct and a d.c. output pulse is produced in the secondary winding circuits 30-32, respectively. Thus, a direct current output voltage is produced in the secondary winding circuits 30-32 through the conduction and non-conduction of the switching transistor 26 during each conversion cycle. The width of the pulse of the direct current output voltage is directly related to the time interval during which the switching transistor 26 does not conduct.

Thus, during each conversion cycle, the switching transistor 26 is conductive and non-conductive. Additionally, the direct current output voltage in each of the secondary winding circuits 30-32 is a function of the energy stored in the primary winding 15a of the transformer 15. More specifically, the energy stored in the transformer 15 is a function of the voltage across the primary winding 15a, and the relationship between the inductance of the primary winding 15a, the current flow through the primary winding 15a, and the inverval of time during which current flows in the primary winding 15a.

The switching transistor 26 is turned on during each conversion cycle automatically from the regenerative effects of the secondary winding 15b of the transformer 15. The voltage across the secondary winding 15b when the switching transistor 26 conducts is $\dfrac{Vraw. \; N15b}{N15a}$

wherein Vraw is the rectified and filtered alternating current voltage applied across the primary winding 15; N15b is the number of turns for the secondary winding 15b; and N15a is the number of turns for the primary winding 15a. Thus, the voltage across the secondary winding 15b is a small percentage of the voltage Vraw and varies directly therewith.

A control circuit 40 (Figures 1 and 2) causes the switching transistor 26 to stop conducting during each conversion cycle when the current flow in the primary winding 15a has reached the correct magnitude to maintain the output voltage in the secondary windings 15c-15e of the proper magnitude or level. To control the maximum power output in the secondary winding circuits 30-32 during various line voltages, the control circuit 40 controls the conduction time of the switching means 25 in response to the current flowing through the primary . winding 15a and in response to the voltage (Vraw) applied across the primary winding 15a. Thus, the lower the voltage (Vraw) the greater the time interval for the current flowing through the primary winding 15a to reach a predetermined value; the greater the conduction of the switching transistor 26; and the greater the width of the direct current output voltage in the secondary winding circuits 30-32. The greater the voltage (Vraw) across the primary winding 15a at variance with a prescribed value, the lesser the conduction time of the switching transistor 26, thereby allowing a predetermined magnitude for the maximum power output.

Toward this end, the control circuit 40 comprises a switching transistor 41. The collector electrode of the switching transistor 41 is connected to the base electrode of the switching transistor 26. When the switching transistor 41 is caused to conduct, the switching transistor 26 will become non-conductive. The switching transistor 26 is caused to conduct automatically during each conversion cycle in a manner heretofore described by the regenerative effects of the secondary winding 15b. When the switching transistor 26 is so caused to conduct. the switching transistor 41 will become non-conductive and is reset to its initial non-conductive state.

A unijunction transistor 42 of the control circuit 40 is connected through its collector electrode to the base electrode of the switching transistor 41. When a voltage applied to the base electrode of the unijunction transistor 42 equals the threshold voltage for the unijunction transistor 42, the switching transistor 41 will conduct and will remain conductive until reset by the switching transistor 26. The unijunction transistor 42 remains conductive until the voltage applied to the base thereof is less than the threshold voltage.

Voltage is applied to the base of the unijunction transistor 42 from the charge stored in a timing capacitor 43 of an R-C time network 44 in the control circuit 40. When the voltage applied to the base of the unijunction transistor 42 equals the threshold voltage for the unijunction transistor 42, the unijunction transistor 42 conducts. In so doing, the charge stored in the timing capacitor 43 is discharged and applied via the unijunction transistor 42 to the base electrode of the switching electrode 41 to cause the conduction thereof.

The R-C time network 44 comprises the timing capacitor 43, resistor 45, variable resistor 46, and variable resistor 47. By adjusting the resistance of the variable resistors 46 and 47, the time constant for charging the timing capacitor 43 is regulated. By regulating the time constant for charging the timing capacitor 43, the time interval in which the switching transistor 41 does not conduct is controlled by controlling the time at which the threshold voltage of the unijunction transistor 42 is reached and by controlling, therefore, the conduction of the switching transistor 41. The variable resistor 46 is set at the magnitude for the lowest voltage operating point and the variable resistor 47 is set at the magnitude for the highest voltage operating point. A diode 55 compensates for the temperature drift of the unijunction transistor 42. Thus, the variable resistors 46 and 47 are adjusted to limit the maximum power output for the power supply 10 over a range of variable voltages in the manner above described and the diode 55 serves to maintain stability over a wide range of operating temperatures.

An optical coupler transistor 60 of the control circuit 40 conducts at a rate inversely related to the flow of current through the switching transistor 26. The emitter electrode of the optical coupler transistor 60 is connected to the timing capacitor 43. Under a no load condition for the switching transistor 26, the optical coupler transistor 60 conducts at a high magnitude of current to rapidly charge the timing capacitor 43 to the threshold voltage of the unijunction transistor 42. Thereupon, the unijunction transistor 42 conducts and the charge stored in the timing capacitor 43 is discharged and applied to the switching transistor 41 via the unijunction transistor 42. This action causes the switching transistor 26 not to conduct.

As the load applied to the power supply 10 is increased, the optical coupling transistor 60 conducts less current. Consequently, the time interval for the timing capacitor 43 to charge for reaching the threshold voltage of the unijunction transistor 42 is longer. As a result thereof, the switching transistor 41 conducts for a lesser time interval during a conversion cycle and the switching transistor 26 conducts for a longer time interval during a conversion cycle. At full load for the switching transistor 26 or at the prescribed value for the current flow through the primary winding 15a, the optical coupling transistor 60 does not conduct. The current for charging the timing capacitor 43 flows through the variable resistor 46. Thus, the resistor 46 and the capacitor 43 form an RC network to set a prescribed time interval for the switching transistor 26 to conduct at full load or at the predetermined magnitude for the current flow through the primary winding 15a.

Zener diodes 65 and 66 serve to compensate for variations in voltages (Vraw) of the magnitude greater than a predetermined magnitude, thus causing less error signal at the feedback summing junction 67. This arrangement allows for improved voltage regulation without having a high loop gain around the control circuit 40. A high loop gain results in instability and slow response time. The Zener diodes 65 and 66 interconnect the primary winding 15a of the transformer 15 with the feedback summing junction 67. The current flow through the Zener diodes 65 and 66 is directly related to the magnitude of the voltage (Vraw) across the primary winding 15a of the transformer 15 when the voltage (Vraw) exceeds a preselected magnitude. The greater the voltage (Vraw) across the primary winding 15a of the transformer 15 in excess of the predetermined voltage (Vraw), the greater the current flow through the Zener diodes 65 and 66. The greater the current flow through the Zener diodes 65 and 66, the lesser the time interval to charge the timing capacitor 43 to the threshold voltage of the unijunction transistor 42. Hence, the switching transistor 41 remains non-conductive for a greater time interval commensurate with the amount that the voltage (Vraw) exceeds a predetermined magnitude during a conversion cycle commensurate with the amount that the line voltage (Vraw) exceeds a predetermined magnitude. Therefore, magnitude of the current pulse in the primary winding 15a is kept constant during a conversion cycle, when the line voltage (Vraw) exceeds a predetermined magnitude.

The voltage drop across the Zener diodes 65 and 66 is selected to be equal to the magnitude of the voltage (Vraw) at the lowest line voltage at which full power is desired. When the voltage drop across the Zener diodes 65 and 66 equals the voltage (Vraw), no current will flow through the variable resistor 47 and the maximum d.c. pulse width is produced in the primary winding 15. As the voltage (Vraw) increases, current flow through the variable resistor 47 charges the timing capacitor 43 at a faster rate. This results in reducing the time in which the switching transistor 26 conducts. The variable resistor 47 is adjusted at the highest line voltage at which the full power is intended.

From the foregoing, it is to be observed that the summing or timing capacitor 43 serves as a reservoir for the charge to turn-off the switching transistor 41. The summing circuit includes the capacitor 43 and the resistor 45. This action minimizes quiescent loss while providing a very rapid high current pulse to be applied to the base electrode of the switching transistor 41.

The secondary winding circuits 30-32 include respectively suitable and conventional filter circuits 70-72 (Figure 2). The rectified direct current output voltages appear across load capacitors 80-82, respectively, of the secondary winding circuits 30-32 and are applied to the filter circuits 70-72. Connected to the output of the filter circuits 70-72 are suitable amplifiers 90-92. In the secondary winding circuit 31, the amplifier 91 is adjustable to regulate the output thereof. In the exemplary embodiment, the regulated output is 12 volts. A -5 volt output is produced by the amplifier 92 of the secondary winding circuit 92. The amplifier 90 of the secondary winding circuit 30 has a reference voltage applied to the input side thereof from the secondary winding circuit 92, and the output of the amplifier 30 is measured via an optical coupling transistor 95 for an error signal.

CLAIMS.

1. A switching power supply (10) comprising: a transformer (15) having a primary winding (15a) and a secondary winding (15c), direct current voltage being applied across said primary winding (15a) and current being arranged to flow through said primary winding (15a); switching means (25) connected to said primary winding (15a), said switching means (25) being operative for providing a path with said primary winding (15a) through which current flows and for interrupting the flow of current through said primary winding (15a); an output circuit (30) including a rectifier (40) connected to said secondary winding (15c) to produce a direct current output voltage during the interval of time in which the flow of current through said primary winding (15a) is interrupted by said switching means (25); and characterized by a control circuit (40) connected to said switching means (25) for controlling the operation thereof in response to the magnitude of the current flowing over said path and in response to the magnitude of the voltage applied across said primary winding (15a).

2. A switching power supply (10) as claimed in claim 1 wherein said control circuit (40) includes means (41-45) to control the operation of said switching means for interrupting the flow of current over said path in response to the current reaching a predetermined magnitude.

3. A switching power supply (10) as claimed in claim 2 wherein said switching means (25) is activated during each conversion cycle by said primary winding (15a) and deactivated during each conversion cycle by said control circuit (40).

4. A switching power supply (10) as claimed in claim 2 wherein said means (41-45) of said control circuit comprises a summing circuit (43,45) to store a charge until the charge is of a predetermined magnitude for the interruption of the flow of current over said path.

5. A switching power supply (10) as claimed in claim 2 wherein said means (41-45) of said control circuit includes a timing circuit (43,45) having a capacitor (43) to store charge until the charge is of a predetermined magnitude for the interruption of the flow of current over said path.

6. A switching power supply (10) as claimed in claim 4 wherein said switching means (25) is activated during each conversion cycle by said primary winding (15a) and deactivated during each conversion cycle by said control circuit (40).

7. A switching power supply (10) as claimed in claim 5 wherein said switching means (25) is activated during each conversion cycle by said primary winding and deactivated during each conversion cycle by said control circuit (40).

8. A switching power supply (10) as claimed in claim 4 wherein said control circuit (40) comprises voltage compensating means (65,66) responsive to said voltage applied across said primary winding (15a) and connected to said summing circuit (43,45) for maintaining the power output in said output circuit (30) within a prescribed maximum magnitude.

9. A switching power supply (10) comprising a transformer (15) having a primary winding (15a) and a secondary winding (15c), voltage being applied across said primary winding (15a) and current being arranged to flow through said primary winding (15a); a switching transistor (26) connected to said primary winding (15a) for providing a path for the flow of current through said primary winding (15a) when in a conductive state and for interrupting the flow of current through said primary winding (15a) when in a non-conductive state; an output circuit (30) including a rectifier (40) connected to said secondary winding (15c) to produce a direct current output voltage during the interval of time in which said switching transistor (26) is in a non-conductive state; and characterized by a control circuit (40) connected to said switching transistor (26) for controlling the operation thereof in response to the magnitude of the current flowing over said path and in response to the magnitude of the voltage applied across said primary winding.

10. A switching power supply (10) comprising a transformer (15) having a primary winding (15a) and a secondary winding (15c), direct current voltage being applied across said primary winding (15a) and current being arranged to flow through said primary winding (15a); switching means (25) connected to said primary winding (15a), said switching means (25) being operative for providing a path with said primary winding (15a) through which current flows and for interrupting the flow of current through said primary winding (15a); an output circuit (30) including a rectifier (40) connected to said secondary winding (15c) to produce a direct current output voltage during the interval of time in which the flow of current through said primary winding (15a) is interrupted by said switching means (25); and characterized by a control circuit (40) connected to said switching means (25) for controlling the operatin thereof in response to the magnitude of the voltage applied across said primary winding (15a).

Fig-1

0072661

1/2

fig-8

+12v REG.

+5v

−5v

GND

15, 15a, 15f, 26, 25, 40, 41, 42, 43, 44, 45, 46, 47, 55, 67, 60, 66, 65, 15b, 20, 16, 10

95, 90, 30, 70, 40', 80, 81, 82, 71, 72, 31, 32, 41', 42', 15c, 15d, 15e, 91, 92